Europäisches Patentamt

European Patent Office

Office européen des brevets

(11) Publication number: **0 542 758 B1**

# EUROPEAN PATENT SPECIFICATION

(45) Date of publication of patent specification: **29.11.95**  (51) Int. Cl.6: **C08F 16/16**, C08F 216/18, C08F 222/06

(21) Application number: **91912312.5**

(22) Date of filing: **11.07.91**

(86) International application number:
**PCT/US91/04875**

(87) International publication number:
**WO 92/02564 (20.02.92 92/05)**

(54) **MALEIC ANHYDRIDE/ALKYL VINYL ETHER POLYMERIZATION PROCESS.**

(30) Priority: **09.08.90 US 565002**
**01.07.91 US 723991**

(43) Date of publication of application:
**26.05.93 Bulletin 93/21**

(45) Publication of the grant of the patent:
**29.11.95 Bulletin 95/48**

(84) Designated Contracting States:
**DE FR GB IT**

(56) References cited:
**DE-B- 1 162 083       US-A- 2 782 182**
**US-A- 3 532 771       US-A- 3 553 183**
**US-A- 3 632 561       US-A- 4 370 454**

(73) Proprietor: **ISP INVESTMENTS INC.**
**818 Washington Street**
**Wilmington,**
**Delaware 19801 (US)**

(72) Inventor: **TAZI, Mohammed**
**3383 Bridle Run Trail N.W.**
**Marietta, GA 30064 (US)**
Inventor: **ARDAN, John, J.**
**62 Arch Street**
**Butler, NJ 07405 (US)**
Inventor: **COHEN, Jeffrey, M.**
**1670 King Street**
**Fanwood, NJ 07023 (US)**
Inventor: **ZAMORA, John, N.**
**52 Heather Lane**
**Paramus, NJ 07652 (US)**

(74) Representative: **Ford, Michael Frederick et al**
**MEWBURN ELLIS**
**York House**
**23 Kingsway**
**London WC2B 6HP (GB)**

EP 0 542 758 B1

**Description**

This invention relates to copolymers of maleic anhydride and a $C_1$-$C_4$ alkyl vinyl ether, and, more particularly, to a process for making such copolymers.

What is described herein is a process for making a copolymer by polymerization of maleic anhydride and a $C_1$-$C_4$ alkyl vinyl ether monomer. The invention involves polymerizing said monomers to form a slurry of said copolymer in excess alkyl vinyl ether as solvent and toluene or an aliphatic organic compound as cosolvent, and is characterized by the steps of: (a) precharging a reactor with $C_1$-$C_4$ alkyl vinyl ether as solvent at a reaction temperature, (b) feeding a mixture of maleic anhydride and a $C_1$-$C_4$ alkyl vinyl ether in substantially stoichiometric amounts, preferably with a slight excess of the alkyl vinyl ether, and at a selected rate, into said precharged reactor, and (c) simultaneously feeding a predetermined mixture of toluene or an aliphatic organic compound as cosolvent, and a polymerization initiator continuously over substantially the entire period of polymerization.

In this method, a suitable reactor is provided with appropriate inlet tubes, agitation means, and heater and temperature control means. The reactor is first purged with nitrogen to remove air from the system. Generally three separate purges are employed, at about 290 kPa (3 bars) pressure and about 40°C. Then the reactor is precharged with a substantial excess of $C_1$-$C_4$ alkyl vinyl ether, preferably methyl vinyl ether, which functions as a solvent to facilitate agitation of the contents of the reactor before and during the polymerization. The alkyl vinyl ether solvent then is heated to a reaction temperature, generally 50-90°C., and preferably about 60°C.

Then separate feed tubes carrying molten anhydride and alkyl vinyl ether are combined in a static mixer and fed into the precharged reactor while agitating the solvent. The maleic anhydride and alkyl vinyl ether reactants usually are combined in substantially stoichiometric ratios of about 1:1, although a slight excess of alkyl vinyl ether monomer is preferred in order to assure that all the maleic anhydride reactant will be complexed by the vinyl ether. A mole ratio of 1:1.05 to 1:1.7 may be used. A 1:1.5 mole ratio is preferred.

The combined maleic anhydride-alkyl vinyl ether feed stream is added to the reactor at a substantially constant feed rate over a suitable period of polymerization. Generally, a period of about 3 hours for addition the mixture of both monomers is typical of the process.

The mole ratio of alkyl vinyl ether to maleic anhydride in total present in the reactor during the polymerization suitably is in a range from 3:1 to 10:1, although lower and higher ratios also may be used. Preferably, a mole ratio of about 8:1 is used.

As a feature of the invention, during substantially the entire period of the polymerization, predetermined amounts of toluene or an aliphatic organic compound as cosolvent and polymerization initiator are introduced continuously into the reactor to control the course of the polymerization. Any suitable initiator known in the art may be used including but not limited to peroxides such as lauryl peroxide. Tertiary-butyl or tertiary-amylperoxy pivalates are preferred. The concentration of initiator may vary widely, but is suitably 0.05 to 2% by weight of maleic anhydride present, although 0.1% by weight usually will suffice for carrying out an effective polymerization.

After the polymerization, the reactor is cooled, excess alkyl vinyl ether (which contains e.g. about 10% toluene) is vented off, and additional toluene is added as a solvent to replace the vented vinyl ether. Then the resultant copolymer slurry in toluene is discharged from the reactor. The copolymer powders can be recovered by filtration and drying. The product is a fine white powder of high specific viscosity with very low residual toluene, generally less than 1%. The copolymer also is quite stable as evidenced by the fact that its viscosity remains substantially constant even after a period of weeks or months.

The vented alkyl vinyl ether-10% toluene mixture can be recycled to function as the precharge in the reactor.

The presence of toluene in the process acts to stabilize the copolymer produced. A suitable amount of toluene for use in the process will produce a reaction slurry mixture at about a 25% solids level after venting alkyl vinyl ether.

The specific viscosities obtained in this process generally range from 2 to 4, and usually about 3, as determined as a 1% solution in 2-butanone.

Suitable aliphatic organic compounds for use as cosolvents herein include methyl t-butylether, ethyl acetate, butyl acetate, propyl acetate, hexane, heptane and cyclohexane.

The compositions containing copolymers of vinyl alkyl ethers with maleic anhydride, and particularly vinyl methyl ether-maleic anhydride interpolymers generally are stable against changes in viscosity in non-aqueous systems, and particularly when such copolymers are present either in the solid state, in non-aqueous solvent solutions, or in non-aqueous liquid suspensions. Preferably, however, when an aliphatic organic compound is used as cosolvent, stability is enhanced by the addition to or admixture with the vinyl alkyl ether-maleic anhydride copolymers of small amounts of free radical inhibiting compounds. Such compounds are characterized as free radical inhibitors and include quinones, hydroquinones, phenols, mercaptans, aromatic amines and aromatic nitro compounds. Butylated hydroxy toluene is a preferred stabilizer compound. The addition of traces of such compounds in amounts of the order of from 0.00001% to 1% based on the weight of the copolymer effects a substantially complete stabilization of the copolymers with which this invention is concerned, whether the latter are present either in the solid state, as a suspension or slurry in a non-aqueous liquid or in a solution in a suitable solvent. The amount of stabilizer which is preferred ranges from 0.0001% to 0.1% based on the weight of the copolymer.

The invention will now be described by reference to the following working examples of the invention.

EXAMPLE 1

A reactor equipped with suitable inlet tubes, agitation means, and heater and temperature control means, was purged three times with nitrogen at 3 bars pressure and at 40°C. The purged reactor then was precharged with a recycled mixture of 192.4 g. of methyl vinyl ether containing 19.24 g. of toluene, and heated to 60°C. Then separate streams of 52.5 g. of molten maleic anhydride and 48.0 g. of methyl vinyl ether were combined in a static mixer and introduced into the reactor over a period of 3 hours while agitating the reaction mixture. After 5 minutes, and thereafter simultaneous with addition of monomers, a solution of 128 g. of toluene and 0.066 g. of lauryl peroxide were introduced into the reactor over the 3-hour period of polymerization. The contents of the reactor then were held at 60°C. for 1 hour, cooled to room temperature, and excess methyl vinyl ether was vented. Then 100 g. of toluene was added. The resultant slurry was discharged from the reactor, filtered, and the solid obtained was dried. 75 g. (90.2% yield) of the desired copolymer was collected as a fine white powder. The specific viscosity of the copolymer powder was 2.54, determined as a 1% solution in 2-butanone. A triphenylphosphite test was negative showing the substantial absence of residual monomers. The toluene level in the copolymer was only 0.75%. The viscosity of the copolymer was observed to remain substantially constant during a test period of 3 months.

Table 1 below summarizes the experimental conditions of this Example.

TABLE I

SUMMARY OF EXPERIMENTAL CONDITIONS OF EXAMPLE 1

| Precharged Reactor | | | Monomer Feed Composition | | |
|---|---|---|---|---|---|
| Excess MVE (g) (moles) | Toluene (g) (% of MVE) | Temp. (°C.) | MA (g) (mole) | MVE (g) (mole) | Mole Ratio MA:MVE |
| 192.4  3.3 | 19.24  10 | 60 | 52.5  0.54 | 47.99  0.83 | 1:1.5 |

| Toluene and Initiator Feed Composition | | Total Addition of | | Polymerization Period |
|---|---|---|---|---|
| Toluene (g) | Initiator (g) (% wt.) | Monomer Mole Ratio MVE:MA | Toluene/ Initiator (g) | (hrs) |
| 128 | 0.066  0.125 | 8:1 | 147.24/0.066 | 3 |

4

EXAMPLE 2

A reactor equipped with suitable inlet tubes, agitation means, and heater and temperature control means, is purged three times with nitrogen at 3 bars pressure and at 40°C. The purged reactor then is precharged with a 192.4 g. of methyl vinyl ether and heated to 60°C. Then separate streams of 52.5 g. of molten maleic anhydride and 48.0 g. of methyl vinyl ether are combined in a static mixer and introduced into the reactor over a period of 3 hours while agitating the reaction mixture. After 5 minutes, and thereafter simultaneous with addition of monomers, a solution of 128 g. of methyl t-butylether and 0.066 g. of lauryl peroxide are introduced into the reactor over the 3-hour period of polymerization. The contents of the reactor then are held at 60°C. for 1 hour, cooled to room temperature, and excess methyl vinyl ether vented. Then 100 g. of methyl t-butylether is added. The resultant slurry is discharged from the reactor, filtered, and the solid obtained is dried. 75 g. (90.2% yield) of the desired copolymer was collected as a fine white powder. The specific viscosity of the copolymer powder is about 3, determined as a 1% solution of the copolymer in 2-butanone. A triphenylphosphite test is negative showing the substantial absence of residual monomers.

EXAMPLE 3

The procedure of Example 2 is followed using ethyl acetate, butyl acetate, propyl acetate, hexane, heptane and cyclohexane in place of methyl t-butylether with similar results.

**Claims**

1. A process for the production of copolymers of maleic anhydride and $C_1$-$C_4$ alkyl vinyl ethers characterized by:
   (a) precharging a reactor with $C_1$-$C_4$ alkyl vinyl ether solvent at a reaction temperature of 50°-90°C.,
   (b) feeding a mixture of maleic anhydride and a $C_1$-$C_4$ alkyl vinyl ether in substantially stoichiometric amounts into said precharged reactor at a selected rate,
   (c) simultaneously feeding a mixture of toluene or an aliphatic organic compound as cosolvent and a polymerization initiator into the reactor substantially continuously over the period of polymerization, and
   (d) copolymerizing said reactants to form a slurry of said copolymer in said solvent and said cosolvent.

2. A process according to claim 1 further characterized by:
   (e) venting excess alkyl vinyl ether,
   (f) discharging the slurry copolymer product from the reactor, and
   (g) recovering the copolymer as a fine, white powder.

3. A process according to claim 1 or claim 2 wherein said cosolvent is toluene.

4. A process according to claim 1 or claim 2 wherein said cosolvent is an aliphatic organic compound selected from methyl t-butylether, ethyl acetate, butyl acetate, propyl acetate, hexane, heptane and cyclohexane.

5. A process according to claim 4 wherein said product includes a stabilizing agent selected from quinones, hydroquinones, phenols, mercaptans, aromatic amines and aromatic nitro compounds.

6. A process according to any one of the preceding claims wherein the mole ratio of alkyl vinyl ether to maleic anhydride in total in the reactor during the polymerization is from 3:1 to 10:1.

7. A process according to any one of the preceding claims wherein the amount of cosolvent present in the reactor will provide a slurry product at about a 25% solids level after venting alkyl vinyl ether.

**Patentansprüche**

1. Verfahren zur Herstellung von Copolymeren von Maleinsäureanhydrid mit $C_1$-$C_4$-Alkylvinylethern, gekennzeichnet durch:

(a) das Vorbeschicken eines Reaktors mit einem $C_1$-$C_4$-Alkylvinylether-Lösungsmittel bei einer Reaktionstemperatur von 50-90 °C;

(b) das Einbringen eines Gemisches von Maleinsäureanhydrid und eines $C_1$-$C_4$-Alkylvinylethers in im wesentlichen stöchiometrischen Mengen in den vorbeschickten Reaktor mit einer ausgewählten Rate;

(c) das gleichzeitige Einbringen eines Gemisches von Toluol oder einer aliphatischen organischen Verbindung als Co-Lösungsmittel und eines Polymerisationsinitiators in den Reaktor im wesentlichen kontinuierlich über die Polymerisationsdauer; und

(d) das Copolymerisieren der Reaktanden zur Bildung einer Aufschlämmung des Copolymers im Lösungsmittel und Co-Lösungsmittel.

2. Verfahren nach Anspruch 1, weiters gekennzeichnet durch:

(e) das Abziehen lassen von überschüssigem Alkylvinylether;

(f) das Ausbringen des Aufschlämmungs-Copolymerprodukts aus dem Reaktor; und

(g) das Gewinnen des Copolymers als feines, weißes Pulver.

3. Verfahren nach Anspruch 1 oder 2, worin das Co-Lösungsmittel Toluol ist.

4. Verfahren nach Anspruch 1 oder 2, worin das Co-Lösungsmittel eine aliphatische organische Verbindung ist, die aus Methyl-t-butylether, Ethylacetat, Butylacetat, Propylacetat, Hexan, Heptan und Cyclohexan ausgewählt ist.

5. Verfahren nach Anspruch 4, worin das Produkt ein Stabilisierungsmittel enthält, das aus Chinonen, Hydrochinonen, Phenolen, Mercaptanen, aromatischen Aminen und aromatischen Nitroverbindungen ausgewählt ist.

6. Verfahren nach einem der vorhergehenden Ansprüche, worin das Gesamt-Molverhältnis von Alkylvinylether zu Maleinsäureanhydrid während der Polymerisation im Reaktor 3:1 bis 10:1 beträgt.

7. Verfahren nach einem der vorhergehenden Ansprüche, worin die Menge des im Reaktor vorhandenen Co-Lösungsmittels nach dem Abziehen lassen von Alkylvinylether ein Aufschlämmungsprodukt mit einem Feststoffgehalt von etwa 25% ergibt.

**Revendications**

1. Procédé de production de copolymères d'anhydride maléique et d'alkylvinyléther en $C_1$-$C_4$ caractérisé par :

(a) le préchargement d'un réacteur avec un alkylvinyléther en $C_1$-$C_4$ solvant à une température de réaction de 50 à 90 °C,

(b) l'alimentation d'un mélange d'anhydride maléique et d'un alkylvinyléther en $C_1$-$C_4$ en quantités substantiellement stoechiométriques dans ledit réacteur préchargé à un taux sélectionné,

(c) l'alimentation simultanée d'un mélange de toluène ou d'un composé aliphatique organique comme cosolvant et d'un initiateur de polymérisation dans le réacteur, substantiellement en continu sur la période de polymérisation, et

(d) la copolymérisation desdits réactants pour former une bouillie dudit copolymère dans ledit solvant et ledit cosolvant.

2. Procédé selon la revendication 1 caractérisé de plus par :

(e) l'évent de l'alkylvinyléther en excès,

(f) le déchargement du copolymère produit en bouillie, du réacteur, et

(g) la récupération du copolymère sous la forme d'une poudre fine blanche.

3. Procédé selon la revendication 1 ou la revendication 2 dans lequel ledit cosolvant est le toluène.

4. Procédé selon la revendication 1 ou la revendication 2 dans lequel ledit cosolvant est un composé organique aliphatique sélectionné parmi le méthyl t-butyléther, l'acétate d'éthyle, l'acétate de butyle, l'acétate de propyle, l'hexane, l'heptane et le cyclohexane.

5. Procédé selon la revendication 4 dans lequel ledit produit inclut un agent stabilisateur sélectionné parmi les quinones, les hydroquinones, les phénols, les mercaptans, les amines aromatiques et les composés nitro aromatiques.

6. Procédé selon l'une quelconque des revendications précédentes dans lequel le rapport molaire de l'alkylvinyléther à l'anhydride maléique au total dans le réacteur durant la polymérisation est de 3:1 à 10:1.

7. Procédé selon l'une quelconque des revendications précédentes dans lequel la quantité de cosolvant présente dans le réacteur donnera un produit en bouillie à une teneur en solides d'environ 25% après l'évent de l'alkylvinyléther.